# EUROPÄISCHE PATENTSCHRIFT

(11) **EP 1 297 023 B1**
(45) Veröffentlichungstag und Bekanntmachung des Hinweises auf die Patenterteilung: **13.01.2010**
(21) Anmeldenummer: 01940573.7
(22) Anmeldetag: 15.06.2001
(51) Int. Cl.: C08F 8/00

(54) **VERFAHREN ZUR HERSTELLUNG VERNETZBARER ACRYLATHAFTKLEBEMASSEN**
METHOD FOR THE PRODUCTION OF CROSS-LINKABLE ACRYLATE CONTACT ADHESIVE MATERIALS
PROCEDE DE PRODUCTION DE SUBSTANCES AUTO-ADHESIVES D'ACRYLATE RETICULABLES

(30) Priorität: 15.06.2000 DE 10029554
(43) Veröffentlichungstag der Anmeldung: 02.04.2003
(73) Patentinhaber: TESA SE, 20253 Hamburg (DE)
(72) Erfinder: DIAMANTIS, Nico, 25774 Lehe (DE); HUSEMANN, Marc, 22605 Hamburg (DE); ZÖLLNER, Stephan, 21244 Buchholz /Nordheide (DE)
(86) Internationale Anmeldenummer: PCT/EP2001/006770
(87) Internationale Veröffentlichungsnummer: WO 2001/096413

(56) Entgegenhaltungen:
- EP-A- 0 168 126
- EP-A- 0 350 664
- EP-A- 0 458 164
- EP-A- 0 481 295
- WO-A-95/00560
- WO-A-97/46594
- DE-A- 2 635 123
- DE-A- 2 746 683
- FR-A- 2 691 971
- GB-A- 2 219 591

## Beschreibung

Die Erfindung betrifft ein Verfahren zur Herstellung von mit Doppelbindungen funktionalisierten Polyacrylaten mit haftklebenden Eigenschaften, deren Kohäsion durch strahleninduzierte Vernetzung erhöht wird, sowie ein mit dieser Polyacrylathaftklebemasse ausgerüstetes Klebeband.

Schmelzhaftkleber sind Verbindungen, die die Eigenschaften von Schmelzklebern mit den Eigenschaften von Haftklebemassen vereinigen. Schmelzhaftkleber schmelzen bei erhöhten Temperaturen und formen bei Abkühlung eine permanent klebrige Schicht, die bei Kontakt mit einem Substrat adhäsiv auffließt. In Kombination mit unterschiedlichen Substraten, wie z.B. Papier, Gewebe, Metall und Kunststoffilmen, können eine Vielzahl unterschiedlicher Produkte, insbesondere Haftklebebänder sowie Etiketten, hergestellt werden. Diese Haftklebeprodukte haben einen weiten Anwendungsbereich in der Automobilindustrie, zum Beispiel zur Befestigung oder zur Abdichtung, oder in der pharmazeutischen Industrie, beispielsweise für Wirkstoffpflaster.

Die typische Beschichtungstemperatur für Schmelzhaftkleber liegt zwischen 80 und 180 °C. Um eine möglichst niedrige Beschichtungstemperatur zu erreichen, sollte das Molekulargewicht des zu beschichtenden Schmelzhaftklebers möglichst niedrig sein. Andererseits muß die Haftklebemasse auch eine gewisse Kohäsion aufweisen, damit bei Anwendung nicht das Haftklebeband vom Substrat abrutscht. Zur Erhöhung der Kohäsion ist wiederum ein hohes Molekulargewicht essentiell.

Zur Lösung dieses Problems wurden Polymere entwickelt, die ein relativ geringes Molekulargewicht besitzen, aber Doppelbindungen entlang der Seitenketten enthalten. Diese Polymere, wie z. B. Polyesteracrylate oder Polyurethanacrylate, können mit UV- oder ionisierender Strahlung effizient über die Doppelbindungen vernetzt werden, die allerdings nur begrenzte adhäsive Eigenschaften haben.

Bei Acrylathaftklebemassen werden zur Promotion der Vernetzung multifunktionelle Acrylate bzw. Methacrylate vor der Vernetzung hinzugegeben, die die Vernetzungsreaktivität erhöhen und damit auch die Kohäsion steigern, die aber nur über einen zweistufigen Mechanismus während der Bestrahlung (Anbindung an das Polymer und dann Vernetzungsreaktion über die noch freien Acrylatdoppelbindung) reagieren und somit eine geringe Vernetzungseffizienz aufweisen.

Das Prinzip der Funktionalisierung von Doppelbindungen durch Copolymerisation läßt sich nicht auf Acrylathaftkleber übertragen, da hier die entsprechenden Polyacrylate über freie radikalische Polymerisation hergestellt werden. Hierbei werden alle Doppelbindungen im Polymerisationsprozeß umgesetzt, oder es treten Vergelungen während der Polymerisation auf. Ein Beispiel hierfür wurde von Pastor dargestellt [US 4,234,662 A], der zur Polymerisation Allylacrylat bzw. Allylmethacrylat einsetzte. Ein zentrales Problem liegt aber in der Copolymerisation dieser Verbindungen, die in der Regel während des radikalischen Polymerisationsprozesses vergelen. Weiterhin sind aufgrund der relativ geringen Reaktivität der Allylgruppen im Hinblick auf eine Vernetzungsreaktion drastische Versuchsbedingungen notwendig, insbesondere hohe Temperaturen oder eine lange Bestrahlungsdauer. Für die Anwendung als vernetzte Haftklebemasse sind die allylmodifizierten Acrylatpolymere daher wenig geeignet.

Eine weitere Möglichkeit zur Funktionalisierung mit Doppelbindungen besteht durch polymeranaloge Reaktionen. Generell können polymeranaloge Reaktionen in Lösung oder aus der Schmelze durchgeführt werden. In der EP 0 608 981 B1 wird ebenfalls auf die Vergelungsproblematik mit Doppelbindungen hingewiesen. Dies wird durch diverse weitere polymeranaloge Umsetzungen unterstützt. So lassen sich Polyacrylate mit Carbonsäure-, Hydroxy-, Epoxid- und Amingruppen in einer polymeranalogen Reaktion mit Doppelbindungen enthaltenden Verbindungen umsetzen, siehe hierzu die US 4,665,106 A. Diese Reaktion konnte aber aufgrund der geringen thermischen Beständigkeit der beteiligten Komponenten nicht auf Hotmelts angewendet werden. Zudem ergaben sich unvorteilhafte Prozeßbedingungen aus der Tatsache, daß zur Vermeidung einer Vergelung große Mengen an Regler zum Polyacryat zugesetzt werden mußten.

Daher wurde für Acrylathotmelts in der US 5,536,759 A die Umsetzung von Hydroxy- oder Carbonsäuregruppen enthaltenden Polyacrylaten mit 1-(1-isocyanato-1-methyl ethyl)-3-(1-methyl ethenyl) benzol (m-TMI) in Lösung mit anschließender Hotmeltaufarbeitung beschrieben.
Dagegen werden die Nach- bzw. Vorteile der einzelnen Verfahren beschrieben [Chemie Ingenieur Technik (70), 1998, S. 560 - 566]: ₙPolymeranaloge Umsetzungen in der Schmelze machen zwei ansonsten getrennt voneinander ablaufende Prozesse möglich. Zuerst finden die Reaktion statt; da das Reaktionsmedium die Schmelze ist, kann schon während der Reaktion mit der formgebenden Verarbeitung durch Extrusion begonnen werden. Auf diesem Wege wird kein zusätzlicher Reaktionsbehälter und keinerlei Aufarbeitung benötigt. Das Fehlen des Lösungsmittels kompliziert allerdings den Reaktionsverlauf in vielerlei Hinsicht, z.B. durch Heterogenität der Reaktionsmischung und die relativ langsame Diffusion der Reaktanden zueinander."
Somit weist das in EP 0 608 981 B1 beschriebene Verfahren die prinzipiellen Nachteile einer polymeranalogen Umsetzung in Lösung auf. Wünschenswert wäre somit ein Verfahren für Acrylathaftklebemassen, das in der Schmelze polymeranaloge Umsetzungen zulässt.
Ein zentrales Problem liegt in der langsamen Diffusion der Reaktanden. Dieses läßt sich nur durch Erhöhung der Reaktionstemperaturen lösen, die die Reaktivität der einzelnen Komponenten zueinander verbessern. Hier unterliegt man aber für Acrylathaftklebemassen natürlichen Grenzen.

Daher werden für polymeranaloge Reaktionen aus der Schmelze in der Regel thermoplastische Materialien eingesetzt, die bei hohen Temperaturen verarbeitet und funktionalisiert werden. So werden z.B. Polystyrol-Maleinsäureanhydrid-Thermoplaste bei Temperaturen von 180 bis 200 °C umgesetzt [Chemie Ingenieur Technik (70), 1998, S. 560 - 566 und Chemie Ingenieur Technik (71), 1999, S. 1418 - 1421]. Weiterhinwerden Polyester mit Maleinsäureanhydrid in der Schmelze zur Reaktion gebracht [Journal of Polymer Science: Part A: Polymer Chemistry, Vol. 37, 1693-1702 (1999)]. Beide Verfahren eignen sich aber nicht zur Funktionalisierung für Acrylathaftklebemassen mit Doppelbindungen. In Journal of Polymer Science: Part A: Polymer Chemistry, Vol. 37, 1693-1702 (1999) wird eine Funktionalisierung durch radikalische Pfropfung vorgenommen, die aber nicht zur Funktionalisierung mit Doppelbindungen verwendet werden kann, da die Vinylverbindungen sofort polymerisieren würden und somit nicht mehr zu einer nachträglichen Vernetzung auf dem Träger zur Verfügung stehen würden. Im Stand der Technik werden Polymerisate eingesetzt [Chemie Ingenieur Technik (70), 1998, S. 560 - 566], die für Haftklebemassen zu hohe Glasübergangstemperaturen aufweisen, die bei Übertrag auf Acrylathaftklebemassen zu hohe Reaktionstemperaturen aufweisen würden (bei den angewendeten hohen Temperaturen treten bereits starke Verfärbungen des Polymers auf durch Reaktionen durch z.B. nach dem Polymerisationsprozess verbliebenen thermisch zerfallenden Initiatoren oder durch die Zersetzung von einzelnen Copolymeren, wie z. B. tert-Butylacrylat, bei oberhalb160 °C, sowie sehr hohe Anteile copolymerisiertes Maleinsäureanhydrid besitzen, welches die Glasübergangstemperatur sehr hoch setzt.

Auch das in der US 5.536.759 A beschriebene Verfahren zu Umsetzung von Polyacrylaten mit 1- (1-isocyanato-1-methyl ethyl)-3-(1-methyl ethenyl) benzol (m-TMI) in Lösung läßt sich nicht auf die oben beschriebenen Verfahren übertragen, da neben der hohen Toxizität der Isocyanate die Vernetzungsreaktivität nach der Beschichtung zu gering wäre.

Die EP 458 164 A beschreibt Lösungen von Copolymerisaten aus (Meth-)Acrylat und Maleinsäureanhydrid, wobei eine Umsetzung mit Allylamin stattfindet. Anschließend findet eine Bestrahlung mit UV-Licht oder mit Elektronen statt.
In dieser Schrift finden sowohl die Polymersiation als auch die Umsetzung zwischen dem Polyacrylat und den reaktiven Monomeren (hier Allylamin) in der Lösung statt. Eine Umsetzung in Masse wird nicht beschrieben.

Ein gravierender und genereller Nachteil aller bisher beschriebenen Verfahren liegt in der geringen Vernetzungsreaktivität nach der Beschichtung. Vinylverbindungen weisen eine geringe Reaktivität gegenüber den zur Vernetzung erzeugten Radikalen auf, so dass die Vernetzung nur unvollständig und mit einem geringen Effekt abläuft. Konkurrenzreaktionen, die nicht zu der gewünschten Vernetzung führen, wie Absättigung der erzeugten Radikale durch Luftsauerstoff oder zugesetzte Klebharze, überwiegen. Die mangelhafte Steuerbarkeit der Vernetzung kann daher sehr problematisch z. B. für das Alterungsverhalten der Haftklebemasse sein, da diese, wenn nicht alle Doppelbindungen während der Vernetzung abreagieren, bei längerer Lagerung ein Nachvemetzungspotenzial aufweisen sowie bei Einfluss durch ultraviolettes Licht oder Sauerstoff beziehungsweise Ozon reagieren und deutlich an Klebkraft verlieren.
Es werden daher Verbindungen, die sich schnell und ohne Vergelung In einer polymeranalogen Reaktion umsetzen lassen, und ein Verfahrens-Prozess benötigt, der eine gelfreie Verarbeitung und Beschichtung auf einem Träger zuläßt, mit dem Ziel, neuartige mit reaktiven Doppelbindungen funktionalisierte Acrylathaftklebebänder zu erhalten, die sich mit einer hohen Reaktivität durch actinische Strahlung vernetzen lassen.

Aufgabe der Erfindung ist es, ein Verfahren zur Herstellung von Haftklebemassen auf Acrylatbasis zur Verfügung zu stellen, welche bei Raumtemperatur ein viskoelastisches Verhalten aufweisen und welche die Nachteile des Standes der Technik nicht aufzeigen. Dabei soll eine Vergelung der Haftklebemassen während des Hotmeltprozesses verhindert werden, insbesondere die thermische Stabilität der Haftklebemasse durch den Einbau der Doppelbindungen nicht verloren gehen, die mit reaktiven Doppelbindungen versehene Acrylathaftkfebernasse anschliessend aus der Schmelze auf einen Träger gelfrei beschichtbar sein und mit hoher Vemetzungseffizienz vernetzt werden.

Die Aufgabe wird überraschend und für den Fachmann nicht vorhersehbar gelöst durch ein Verfahren, wie es im Hauptanspruch dargestellt wird. Die weiteren Ansprüche betreffen vorteilhafte Weiterentwicklungen dieses Verfahrens.

Der Hauptanspruch betrifft dementsprechend ein Verfahren zur Herstellung vernetzter Acrylathaftklebemassen, bei dem
- zunächst durch freie radikalische (Co-)Polymerisation Polyacrylate aus den folgenden Monomeren hergestellt werden:
   (a) Acryl- und Methacrylsäure-Monomere der folgenden Struktur 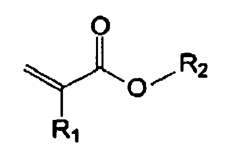 mit R₁ = H oder CH₃
      und R₂ = eine Alkylkette mit 2 - 20 C-Atomen
      mit einem Anteil von 45 - 99,5 Gew.-% am Monomergemisch,
   (b) ein oder mehrere Carbonsäureanhydride, welche olefinische Doppelbindungen enthalten,
      mit einem Anteil von 0,5 - 25 Gew.-% am Monomergemisch, mehr bevorzugt mit einem Anteil von 1 - 5 Gew.-% am Monomergemisch,
   (c) weitere funktionelle Gruppen A besitzende olefinisch ungesättigte Monomere mit einem Anteil von 0 - 30 Gew.-% am Monomerengemisch
- die derart hergestellten Polymere zu einer Polyacrylatmasse aufkonzentriert werden, deren Lösungmittelgehalt ≤ 0,5 Gew.-% ist,
- weitere Monomere zu der Polyacrylatmasse gegeben werden, wobei diese Monomere mindestens zwei funktionelle Gruppen B und C besitzen, wobei die Gruppen B mit den Carbonsäureanhydriden polymeranaloge Reaktionen eingehen können und die Gruppen C vernetzungsfähige Gruppen sind, und eine Reaktion zwischen den funktionellen Gruppen B und dem Carbonsäureanhydrid stattfindet, welches die die funktionellen Gruppen B enthaltenden Monomere als Seitenketten an die Polymere anknüpft,
- nach der Reaktion zwischen den funktionellen Gruppen B und dem Carbonsäureanhydrid die Waftklebemasse aus der Schmelze auf einen Träger aufgetragen wird,
- durch energiereiche Strahlung eine Vernetzung der Polymere auf dem Träger durchgeführt wird.

Das Verfahren erlaubt die Einführung funktioneller Gruppen in die Polymere, welche für eine spätere effiziente Vernetzung unter milden Bedingungen zur Verfügung stehen, ohne daß die die Vernetzung ermöglichenden funktionellen Gruppen während des Polymerisationsprozesses verbraucht werden oder ihre Funktionalität verlieren.

Durch die Einführung der die funktionellen Gruppen B und C enthaltenden Verbindungen nach bereits erfolgter Polymerisation behalten die für die Vernetzung reaktiven funktionellen Gruppen C ihre Reaktivität auch nach dem Einbau an die Polymerketten. Funktionelle Gruppen, welche für die Vernetzungsreaktion eine hohe Effizienz aufweisen, können derart in die Polymere eingeführt werden, auch wenn diese funktionellen Gruppen bei einer radikalischen Polymerisation ihre Funktionalität verlieren würden.
Die mittleren Molekulargewichte (Gewichtsmittel M_{w}) der bei der freien radikalischen Polymerisation entstehenden Haftklebemassen werden derart gewählt, dass sie in einem für Polyacrylatmassen üblichen Bereich, also zwischen 100.000 und 2.000.000 liegen; speziell für die weitere Verwendung als Schmelzhaftkleber werden Haftklebemassen mit mittleren Molekulargewichten (Gewichtsmittel M_{w}) von 100.000 bis 800.000, mehr bevorzugt von 100.000 bis 400.000 g/mol hergestellt. Die Polymerisation kann in Gegenwart eines organischen Lösungsmittels, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten.

Die Polymerisationszeit beträgt - je nach Umsatz und Temperatur - zwischen 6 und 48 Stunden. Je höher die Reaktionstemperatur gewählt werden kann, das heißt, je höher die thermische Stabilität des Reaktionsgemisches ist, desto geringer kann die Reaktionsdauer gewählt werden.

Es ist insbesondere im Sinne der Erfindung von Vorteil, das Verfahren dergestalt zu betreiben, dass die Zugabe der die funktionellen Gruppen B und C besitzenden Monomere und die Reaktion der funktionellen Gruppen B mit dem Carbonsäureanhydrid direkt nach dem Aufkonzentrationsschritt erfolgt.

In einer Weiterentwicklung der Erfindung findet dieser Prozess in einem Extruder statt, als hierfür sehr geeignet hat sich ein Doppelschneckenextruder (z. B. Werner & Pfleiderer, ZSK 40) oder ein Cokneter (z. B. Buss) herausgestellt (reaktive Extrusion). Die durch die radikalische Polymerisation hergestellten Acrylathaftklebemassen werden im Extruder aufkonzentriert und vom Lösungsmittel befreit. Erfindungsgemäß liegt der Gehalt an Lösungsmittel in der Polymermasse nach dem Aufkonzentrationsprozess bei unter 0,5 Gew.-%. Nach der Aufkonzentration erfolgt die Zugabe der mit den funktionellen Gruppen B und C versehenen Komponente im Extruder beziehungsweise im Cokneter, bevorzugt durch Zudosierung. Hier findet die Reaktion zwischen den funktionellen Gruppen B und den in die Polymerketten eingebauten Carbonsäureanhydridgruppen statt. In einer bevorzugten Ausgestaltung des erfinderischen Verfahrens kann die Zugabe in einem zweiten Extruder erfolgen. Hier kann durch Verfahrenslänge, Durchsatz (Drehzahl), Knettemperatur und Menge des eventuell eingesetzten Katalysators die optimalen Reaktionsbedingungen eingestellt werden. Weiterhin sollte die Schneckengeometrie des Extruders relativ scherarm gewählt werden, um Vergelungen im Prozess zu vermeiden.

Im erfinderischen Sinne vorteilhaft lassen sich alle vernetzungsfähige Gruppen C enthaltende Verbindungen einsetzen, die außerdem eine Hydroxyfunktion besitzen, welche mit dem Carbonsäureanhydrid reagieren kann.

Außer durch Hydroxygruppen substituierte Verbindungen sind in günstiger Weise für das erfinderische Verfahren auch vernetzungsfähige Gruppen C enthaltende Verbindungen einsetzbar, die andere funktionelle Gruppen enthalten, die direkt oder unter Katalyse mit dem Carbonsäureanhydrid reagieren können, insbesondere im Sinne einer Verknüpfungreaktion. Solche funktionellen Gruppen sind dem Fachmann geläufig, hier seinen beispielhaft und ohne sich durch die Aufzählung unnötig beschränken zu wollen die folgenden genannt:
Alkoxygruppen, Mercaptogruppen, Thioethergruppen, Hydroxygruppen, unsubstituierte und substituierte Aminogruppen, Oxazoline und/oder unsubstituierte oder substituierte Amidogruppen, aber auch alle anderen im oben geschilderten Sinne mit Carbonsäureanhydriden reagierenden funktionellen Gruppen.
Um eine gute und effiziente Vernetzung der Polymere zu gewährleisten, werden als vernetzungsfähige Gruppen B beispielsweise in hervorragender Weise Vinylgruppen oder noch bevorzugter Acrylat- oder Methacrylatgruppen eingesetzt, diese auch in Form ihrer substituierten Derivate.
Als funktionelle Gruppen B und C enthaltende Monomere werden demzufolge vorteilhaft im Sinne des Erfindungsgedankens Hydroxygruppen enthaltende Acrylate, wie sehr bevorzugt z.B. 2-Hydroxyethylacrylat (2-HEA, Acrylsäure-2-hydroxyethylester), Hydroxypropylacrylat (Acrylsäure-3-hydroxypropylester) und Hydroxygruppen enthaltende Methacrylate, wie z.B. 2-Hydroxyethylmethacrylat (2-HEMA, Methacrylsäure-2-hydroxyethylester), Hydroxypropylmethacrylat (Methacrylsäure-3-hydroxypropylester) hinzugegeben, und/oder Vinylverbindungen, wie z. B. 1-Decenol, Oxazoline, wie z.B. Ricinenalkyloxazolin oder Sojaalkyloxazolin, Acrylamide, wie z.B. Butoxymethylacrylamid, oder substituierte Aminoverbindungen, wie z.B. tert.-Butylaminoethylmethacrylat.

Der molare Anteil der zugegebenen durch die Gruppen B und C funktionalisierten Verbindung entspricht bevorzugt der molaren Menge des in der Polyacrylatkette einpolymerisierten Carbonsäureanhydrids, kann aber auch kleiner oder größer als diese gewählt werden.
Die Menge der zugegebenen durch die Gruppen B und C funktionalisierten Verbindung wird dabei sehr bevorzugt derart gewählt, daß das molare Verhältnis der Zahl n_{B} der funktionellen Gruppen B der zugesetzten Monomere zu der Zahl n_{CSA} der einpolymerisierten Carbonsäureanhydrideinheiten n_{B}/n_{CSA} in einem Größenbereich zwischen 0,8 und 1,2 liegt, sehr bevorzugt zwischen 0,8 und 1 liegt, also n_{B}/n_{CSA} ≤ 1 ist.

In einer bevorzugten Variante des erfinderischen Verfahrens werden zwischen 0.1 und 25, bevorzugt zwischen 1 und 19 Gew.-% der durch die Gruppen B und C funktionalisierten Verbindungen - bezogen auf das Polymer - hinzugegeben. Durch die Menge des copolymerisierten Carbonsäurenanhydrids als auch durch die Menge der mit B oder C funktionalisierten Verbindung kann die Reaktionsgeschwindigkeit für die polymeranaloge Reaktion in der Schmelze gesteuert werden.

In einer für das Verfahren sehr günstiger Vorgehensweise werden Katalysatoren zur Steigerung der Reaktivität hinzugegeben. Der Anteil des Katalysators beträgt zwischen 0,01 und 5 Mol-%, bevorzugt aber zwischen 0,1 und 0,5 Mol-%, bezogen auf das Carbonsäureanhydrid.
Die Reaktion verläuft unter Säure- oder Basenkatalyse. Als Säuren lassen sich alle Lewis-aciden Verbindungen einsetzen. Bevorzugt läuft die Reaktion mit p-Toluolsulfonsäure, Itakonsäure, Dibutylzinnoxid oder mit Natriumacetat. Als Basen lassen sich alle Lewis-Basen einsetzen. Bevorzugt läuft die Reaktion unter 4-Vinylanilin-Katalyse.

Entsprechend der Fließviskosität des eingesetzten Polyacrylates verläuft die Reaktion bei erhöhten Temperaturen. Die Temperaturen werden bevorzugt zwischen 60 und 180 °C gewählt, in einem besonders bevorzugten Bereich zwischen 110 und 160 °C.
Für das erfindungsgemäße Verfahren kann es ebenfalls von Vorteil sein, das Molekulargewicht zu variieren und die Verarbeitbarkeit in der Schmelze zu verbessern. So läßt sich z.B. durch Reduktion des Molekulargewichtes die Fließviskosität herabsetzen und somit die Reaktionsfreudigkeit erhöhen. Ein weiterer Punkt ist die Verarbeitbarkeit unter Scherung im Extruder, da niederviskosere und niedermolekulare Haftklebemassen leichter im Extruder verarbeitbar sind und die eingebrachte Scherung somit stark reduziert wird.

Die Compoundierung, also die Zugabe weiterer Additive, kann generell ebenfalls in derselben Apparatur wie die bisherigen Schritte, in einem weiteren Extruder oder in einem Compounder durchgeführt werden, hier kann auch eine zusätzliche Durchmischung der Polymermasse erfolgen.
Zur Herstellung der Klebebänder werden die oben beschriebenen Polymere optional mit Vernetzern abgemischt: Geeignete Vernetzersubstanzen in diesem Sinne sind bi- oder multifunktionelle Acrylate, bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.
Für die Vernetzung mit ultravioletter Strahlung werden Photoinitiatoren eingesetzt. Als Phototinitiatoren seien, ohne sich unnötig beschränken zu wollen, beispielsweise genannt spaltende (radikalbildende) Photoinitiatoren, insbesondere α-Spalter, und Wasserstoffabstraktoren. Zur Gruppe der photospaltenden Initiatoren seien bespielhaft genannt aromatische Carbonylverbindungen, insbesondere Benzoinderivate, Benzilketale und Acetophenonderivate. Zu den H-Abstraktoren gehören beispielsweise aromatische Ketone, wie z. B. Benzophenon, Benzil, Thioxanthone.

Weiterhin werden zur Herstellung von Haftklebemassen diese Elastomere optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen. Auf die Darstellung des Wissensstandes im "Handbook of Pressure Sensitive Adhesive Technology" von Donatas Satas (van Nostrand, 1989) sei ausdrücklich hingewiesen.
Die Acrylathotmelts können des weiteren mit einem oder mehreren Additiven wie Alterungsschutzmitteln, Lichtschutzmitteln, Ozonschutzmitteln, Fettsäuren, Harzen, Weichmachern, Keimbildnern, Blähmitteln und Beschleunigern abgemischt sein. Als Alterungsschutzmittel können sowohl primäre als auch sekundäre Alterungsschutzmittel sowie Lichtschutzmittel auch in Kombination miteinander eingesetzt werden. Hier soll nur an dieser Stelle auf die entsprechenden Irganox™ Typen der Fa. Ciba Geigy bzw. Hostanox™ der Firma Clariant verwiesen werden. Als weitere hervorragende Mittel gegen Alterung können Phenothiazin (C-Radikalfänger) sowie Hydrochinonmethylether in Gegenwart von Sauerstoff sowie Sauerstoff selbst eingesetzt werden..
Weiterhin können die Schmelzhaftklebemassen mit einem oder mehreren Füllstoffen wie Fasern, Ruß, Zinkoxid, Titandioxid, Mikrovollkugeln, Voll- oder Hohlglaskugeln, Kieselsäure, Silikaten und Kreide gefüllt sein, wobei auch der Zusatz von blockierungsfreien Isocyanaten möglich ist.

Die auf diese Weise abgemischten Acrylathaftklebemassen werden bevorzugt aus der Schmelze (Hotmelt) weiterverarbeitet. Für die Verwendung als Klebemasse für Klebebänder werden sie auf einen Träger beschichtet und anschließend zur Kohäsionssteigerung vernetzt. Es ist vorteilhaft, die funktionalisierte Acrylathaftklebemasse gelfrei aus der Schmelze zu beschichten. Hierfür werden bevorzugt Schmelzdüsen oder Extrusionsdüsen mit einer Spaltbreite von 100 bis 500 µm, mehr bevorzugt von 150 bis 300 µm eingesetzt.

Als Trägermaterial lassen sich hierbei die dem Fachmann geläufigen und üblichen Materialien, wie Folien (Polyester, PET, PE, PP, BOPP, PVC), Vliese, Schäume, Gewebe und Gewebefolien sowie gegebenenfalls Trennpapier (beispielsweise Glassine, HDPE, LDPE) verwenden. Diese Aufzählung soll nicht abschließend sein.
Die Klebemassen werden mit UV-Licht oder mit ionisierender Strahlung vernetzt. Verbleibende, nicht im Hotmelt-Prozeß bzw. der reaktiven Extrusion umgesetzte Vinylverbindungen reagieren mit den während der Vernetzung gebildeten Radikale und werden spätestens zu diesem Zeitpunkt an das Polymer gebunden, so daß sie zu einem späteren Zeitpunkt nicht mehr aus dem Haftklebeband entweichen können. Die Vernetzung durch UV-Strahlen oder Elektronenstrahlen verläuft durch die in den Seitenketten enthaltenden Doppelbindungen sehr effizient.

Im Vergleich zu nicht-funktionalisierten Polyacrylaten kann die zur optimalen Vernetzung erforderliche Dosis herabgesetzt werden, wodurch weniger Energie benötigt wird und im Fall der Elektronenstrahl-Vemetzung das Trägermaterial weniger geschädigt wird. Zudem wurde eine kohäsionssteigernde Wirkung erzielt.
Im Gegensatz zu durch allylische Doppelbindungen modifizierte Polyacrylate wird die thermische Stabilität bei den durch das erfinderische Verfahren erzeugten Polyacrylaten nicht wesentlich herabgesetzt. Die thermische Stabilität bleibt für die Verarbeitung im Hotmelt-Beschichtungs-Verfahren ausreichend hoch. So sind derart hergestellte Reinacrylatsysteme bei 140 °C, harzabgemischte Systeme bei 120 °C für mindestens 48 Stunden gelfrei.

Das erfindungsgemäße Verfahren eröffnet die Anwendung der Verfahrens der Reaktivextrusion bei der Herstellung von Haftklebemasse auf Polyacrylatbasis. Dieses Ergebnis ist überraschend und war für den Fachmann nicht vorherzusehen, im Gegenteil hätte der Fachmann erwartet, daß die sehr drastischen Prozeßbedingungen (Hohe Temperaturen, lange Verweilzeiten), welche für die reaktive Extrusion typisch sind, zu einer hohen Vergelung im Extruder führen würden.

So sind in die im erfindungsgemäßen Verfahren hergestellten Polyacrylate Carbonsäureanhydridgruppen, Carbonsäuregruppen, Hydroxygruppen eingebaut, weiterhin sind (Meth-)Acrylatgruppen als Seitenketten vorhanden. Bei den Bedingungen der Reaktivextrusion wären Nebenreaktionen, beispielsweise in Form von Umesterungsreaktionen, insbesondere solche der Polymerketten untereinander zu erwarten gewesen. Solche Nebenreaktionen hätten eine hohe Vergelung der Polyacrylatmasse zur Folge. Wider Erwarten wurden derartige Reaktionen so gut wie nicht beobachtet, vielmehr findet bevorzugt eine Reaktion gemäß der Erfindung zwischen den Carbonsäuregruppen (bevorzugt Maleinsäureanhydridgruppen) und den funktionellen Gruppen B der zugesetzten Monomere (bevorzugt Hydroxygruppen) statt. Hierdurch wird überraschend die Durchführung polymeranaloger Reaktionen im Extruder ermöglicht, welche aufgrund der hohen Reaktionsgeschwindigkeiten zu niedrigen Verweilzeiten im Extruder führen.
Dabei gelingt es, gelfreie Polyacrylatmassen mit einer hohen Stabilität bezüglich eines Vergelungsprozesses herzustellen ("gelfrei" bedeutet die Erfüllung der Anforderungen für eine Beschichtbarkeit der Massen mit den üblicherweise verwendeten Beschichtungsapparaturen). Aufgrund der Gelfreiheit lassen sich die Polyacrylatmassen für aus der Schmelze beschichtbare Klebemassen verwenden und somit als Haftklebemassen beispielsweise für Haftklebebänder verwenden. Die Beschichtbarkeit zeichnet sich durch ein gleichmäßiges (homogenes) Beschichtungsbild ohne Inhomogenitäten aus, wenn durch die üblicherweise verwendeten Beschichtungsdüsen (Schmelzdüsen oder Extrusionsdüsen mit einer Spaltbreite von 100 bis 500 µm, mehr bevorzugt von 150 bis 300 µm) beschichtet wird, beispielsweise auf Polyesterträger mit 50 µm Dicke. Die üblicherweise in Reaktivextrusionsverfahren hergestellten Polyacrylatmassen genügen diesen Anforderungen nicht und lassen sich nicht als Haftklebemassen einsetzen.
Die Beschichtung der Haftklebemasse auf einen Träger erfolgt sehr bevorzugt in einen Inline-Prozeß, kann aber alternativ auch Offline betrieben werden. Nach der Beschichtung auf den Träger kann die Haftklebemasse dann der gewünschten Vernetzungsreaktion unterworfen werden.
Das erfindungsgemäße Verfahren stellt erstmalig den Einbau von (Meth-)Acrylatgruppen in die Seitenketten von Polyacrylaten in Hotmelt-Systemen zur Verfügung. Hierdurch bietet sich der Vorteil von sehr schonenden Vernetzungsmethoden, da direkt über die eingebauten Acrylatgruppen vernetzt werden kann. Wird mit Elektronenstrahlen vernetzt, so ist die Vernetzungs-Reaktionsgeschwindigkeit sehr hoch und der Umsatz der Acrylatgruppen hoch. Somit besitzen durch das erfinderische Verfahren hergestellte und vernetzte Polyacrylathaftklebemassen kein oder nur ein sehr geringes Nachvernetzungspotential. Üblicherweise zusätzlich zugegebene Vernetzersubstanzen werden in der Regel nicht vollständig während der Vernetzungsreaktion umgesetzt, so daß die Haftklebemassen altern und die Haftklebeprodukte im Laufe der Zeit unbrauchbar werden.

### Beispiele

### Eingesetzte kommerziell erhältliche Chemikalien - Handelsnamen

| **Substanz** | **Hersteller** | **Chemische Zusammensetzung** |
|---|---|---|
| Novares T K90 | Rüttgers | aliphatisch, modifiziertes Kohlenwasserstoffharz aus einem Copolymerisat ungesättigter, aromatischer C9-/C10-Kohlenwasserstoffe und einer aliphatisch ungesättigten Koponente Erweichungsbereich 85 bis 95 °C |
| Vazo 67 | DuPont | 2,2'-Azo-bis(2-methylbuttersäurenitril) |
| Perkadox 16 | Akzo Nobel | Bis-(4-tert.-butylcyclohexyl)-peroxydicarbonat |
| Irgacure 819 | Ciba Geigy | Bis-(2,4,6-trimethylbenzoyl)-phenylphosphinoxid |

### Testmethoden

Folgende Testmethoden wurden angewendet, um die klebtechnischen Eigenschaften der hergestellten Haftklebemassen zu evaluieren.

### Scherfestigkeit (Test A)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit einem 2 kg-Gewicht das Klebeband viermal auf den Stahlträger gedrückt. Bei Raumtemperatur wurde ein 1 kg-Gewicht an dem Klebeband befestigt und die Zeit bis zum Abfallen des Gewichtes gemessen.
Die gemessenen Scherstandzeiten sind in Minuten angegeben und entsprechen dem Mittelwert aus drei Messungen.

### Bestimmung des Gelanteils (Test B)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert als prozentuale Angabe des Gewichtsanteil des Polymers, der nicht in Toluol löslich ist, bestimmt.

### IR-Spektroskopie

Zur Messung wurde das FT-IR IFS 45 Spektrometer der Fa. Bruker eingesetzt. Zunächst wurde mit verschiedenen Konzentrationen der einzelnen Carbonsäureanhydride eine Eichgerade erstellt. Zur Bestimmung des Umsatzes der entsprechenden Anteile an Carbonsäureanhydrid wurde der prozentuale Abfall der CO-Bande gemessen.

### Untersuchte Proben

Die verwendeten Carbonsäureanhydride sind kommerziell erhältlich. 2-HEA (2-Hydroxyethylacrylat) und 2-HEMA (2-Hydroxyethylmethacrylat) wurden zuvor destillativ gereinigt und unter Stickstoffatmosphäre aufbewahrt.

### Beispiel 1

Ein für radikalische Polymerisationen konventioneller Reaktor wurde mit 500 g 2-Ethylhexylacrylat, 350 g Methylacrylat, 70 g Butylacrylat, 80 g 4-Methacryloxyethyl Trimellitatanhydrid und 540 g Aceton/Siedegrenzbenzin (1:1) befüllt. Nach 45 Minuten Durchleiten von Stickstoffgas und zweimaligem Entgasen wurde der Reaktor unter Rühren auf 58 °C hochgeheizt, weiterhin wurden 0,2 g Azoisobutyronitril (AIBN) hinzugegeben. Anschließend wurde das äußere Heizbad auf 70 °C erwärmt und die Reaktion konstant bei dieser Außentemperatur durchgeführt. Nach 1 h Reaktionszeit wurden wiederum 0,2 g AIBN hinzugegeben. Nach 3 h und 6 h wurde mit jeweils 250 g Aceton/Siedegrenzbenzin (1:1) verdünnt. Die Reaktion wurde nach 24 h Reaktionszeit abgebrochen und auf Raumtemperatur abgekühlt. Zur klebtechnischen Ausprüfung wurden 100 g der Klebemasse (bezogen auf fest) mit 0,4 g Bis-(2,4,6-trimethylbenzoyl)-phenylphosphinoxid (Irgacure 819; Fa. Ciba Geigy) abgemischt, und die Klebemasse mit einem Masseauftrag von 50 g/m² (bezogen auf fest) auf eine mit Vorstrich (Primer) versehene PET-Folie aufgetragen (23 µm Dicke). Die Muster wurden dann mit einer UV-Bestrahlungsanlage der Fa. Eltosch (254 nm, 120 W/cm) mit 20 m/min (4 Lampendurchgänge) bestrahlt.
Anschließend erfolgte die klebtechnische Ausprüfung nach den Testmethoden A und B.

### Beispiel 2

Ein für radikalische Polymerisationen konventioneller Reaktor wurde mit 10 g Acrylsäure, 375 g 2-Ethylhexylacrylat, 200 g Methylacrylat, 375 g Butylacrylat, 40 g Itakonsäureanhydrid und 290 g Aceton/Siedegrenzbenzin (1:1) befüllt. Nach 45 Minuten Durchleiten von Stickstoffgas und zweimaligem Entgasen wurde der Reaktor unter Rühren auf 58 °C hochgeheizt und 0,2 g Azoisobutyronitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,2 g AIBN hinzugegeben. Nach 3 h und 6 h wurde mit jeweils 250 g Aceton/Siedegrenzbenzin (1:1) verdünnt. Die Reaktion wurde nach 24 h Reaktionszeit abgebrochen und auf Raumtemperatur abgekühlt.
Zur klebtechnischen Ausprüfung wurde die Klebemasse mit einem Masseauftrag von 50 g/m² (bezogen auf fest) auf eine mit Vorstrich (Primer) versehene PET-Folie aufgetragen (23 µm Dicke). Die Muster wurden dann mit einer Elektronenstrahl-Dosis von 20 kGy bei einer Beschleunigungsspannung von 230 kV (ESH-Anlage der Fa. Crosslinking) bestrahlt.
Anschließend erfolgte die klebtechnische Ausprüfung nach den Testmethoden A und B.

### Beispiel 3

Ein für radikalische Polymerisationen konventioneller Reaktor wurde mit 20 g Acrylsäure, 810 g 2-Ethylhexylacrylat, 50 g Methylacrylat, 120 g g 4-Methacryloxyethyl Trimellitatanhydrid und 540 g Aceton/Siedegrenzbenzin (1:1) befüllt. Nach 45 Minuten Durchleiten von Stickstoffgas und zweimaligem Entgasen wurde der Reaktor unter Rühren auf 58 °C hochgeheizt und 0,2 g Azoisobutyronitril (AIBN) hinzugegeben. Anschließend wurde das äußere Heizbad auf 70 °C erwärmt und die Reaktion konstant bei dieser Außentemperatur durchgeführt. Nach 1 h Reaktionszeit wurden wiederum 0,2 g AIBN hinzugegeben. Nach 3 h und 6 h wurde mit jeweils 250 g Aceton/Siedegrenzbenzin (1:1) verdünnt. Die Reaktion wurde nach 24 h Reaktionszeit abgebrochen und auf Raumtemperatur abgekühlt.
Zur klebtechnischen Ausprüfung wurde die Klebemasse mit einem Masseauftrag von 50 g/m² (bezogen auf fest) auf eine mit Vorstrich (Primer) versehene PET-Folie aufgetragen (23 µm Dicke). Die Muster wurden dann mit einer Elektronenstrahl-Dosis von 15 kGy bei einer Beschleunigungsspannung von 230 kV (ESH-Anlage der Fa. Crosslinking) bestrahlt.
Anschließend erfolgte die klebtechnische Ausprüfung nach den Testmethoden A und B.

### Beispiel 4

Ein für radikalische Polymerisationen konventioneller Reaktor wurde mit 20 g Acrylsäure, 430 g 2-Ethylhexylacrylat, 100 g Methylacrylat, 430 g Butylacrylat, 20 g Maleinsäureanhydrid und 212 g Aceton/Siedegrenzbenzin (1:1) befüllt. Nach 45 Minuten Durchleiten von Stickstoffgas und zweimaligen Entgasen wurde der Reaktor unter Rühren auf 58 °C hochgeheizt und 0,2 g Azoisobutyronitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,2 g AIBN hinzugegeben. Nach 3 h und 6 h wurde mit jeweils 300 g Aceton/Siedegrenzbenzin (1:1) verdünnt. Die Reaktion wurde nach 24 h Reaktionszeit abgebrochen und auf Raumtemperatur abgekühlt.
Zur klebtechnischen Ausprüfung wurde die Klebemasse mit einem Masseauftrag von 50 g/m² (bezogen auf fest) auf eine mit Vorstrich (Primer) versehene PET-Folie aufgetragen (23 µm Dicke). Die Muster wurden dann mit einer Elektronenstrahl-Dosis von 25 kGy bei einer Beschleunigungsspannung von 230 kV (ESH-Anlage der Fa. Crosslinking) bestrahlt.
Anschließend erfolgte die klebtechnische Ausprüfung nach den Testmethoden A und B.

### Beispiel 5

Ein für radikalische Polymerisationen konventioneller Reaktor wurde mit 1500 g 2-Ethylhexylacrylat, 200 g Methylacrylat, 100 g Acrylsäure, 100 g Maleinsäureanhydrid, 100 g N-tert.-Butylacrylamid und 330 g Aceton. Nach 45 Minuten Durchleiten von Stickstoffgas und zweimaligen Entgasen wurde der Reaktor unter Rühren auf 66 °C hochgeheizt und 1 g Vazo 67™ (Fa. DuPont) hinzugegeben. Nach 8 h erfolgte erneut eine Zugabe von 1 g Vazo 67™ (Fa. DuPont) und 500 g Aceton. Nach 24 h und 28 h erfolgte jeweils eine Zugabe von 2.5 g Perkadox 16 (Fa. Akzo Nobel). Nach 32 h wurde mit 600 g Aceton verdünnt. Die Reaktion wurde nach 48 h Reaktionszeit abgebrochen und auf Raumtemperatur abgekühlt. Zur klebtechnischen Ausprüfung wurde die Klebemasse mit einem Masseauftrag von 50 g/m² (bezogen auf fest) auf eine mit Vorstrich (Primer) versehene PET-Folie aufgetragen (23 µm Dicke). Die Muster wurden dann mit einer Elektronenstrahl-Dosis von 10 kGy bei einer Beschleunigungsspannung von 230 kV (ESH-Anlage der Fa. Crosslinking) bestrahlt.
Anschließend erfolgte die klebtechnische Ausprüfung nach den Testmethoden A und B.

### Beispiel 6

Im Vergleich zu Beispiel 5 wurde die Acrylathaftklebemasse mit 30 Gew-% (bezogen auf das Polymer) Kohlenwasserstoffharz TK 90™ (Fa Rüttgers) abgemischt und beschichtet. Es wurde analog zu Beispiel 5 vorgegangen. Die Masse wurde mit 30 kGy ES-Dosis bei einer Beschleunigungsspannung von 230 kV bestrahlt.

### Durchführung des Heißschmelz-(Hotmelt-)prozesses im Meßkneter:

Die Scherung und thermische Belastung der Acrylathotmelts wurde mit dem Meßkneter Rheomix 610p der Fa. Haake durchgeführt. Als Antriebseinheit wurde das Gerät Rheocord RC 300p verwendet. Gesteuert wurde das Gerät mit der Software PolyLab System. Der Kneter wurde jeweils mit 52 g der Acrylathaftklebemasse/Monomer Mischung (-80 % Füllgrad) befüllt. Die Versuche wurden bei einer Knettemperatur von 110 bzw. 130 °C, einer Umdrehungszahl von 30 U/min und einer Knetzeit von einer Stunde durchgeführt. Anschließend wurden das Muster als Hotmelt durch eine Schlitzdüse bei etwa 130 °C beschichtet.

### Beispiel 1#

In Analogie zu Beispiel 1 wurde die Acrylathaftklebemasse nach dem Abkühlen vom Lösemittel befreit und 100 g des Acrylathotmelts mit 1,8 g 2-HEA (2-Hydroxyethylacrylat) sowie 0,1 g 4-Vinylanilin vermischt. 52 g dieser Mischung wurden nach oben dargestellter Vorgehensweise im Meßkneter bei 110 °C verarbeitet. Nach Beendigung der Reaktion und Beschichtung wurde analog zu Beispiel 1 vorgegangen.

Der Umsatz der Reaktion wurde über IR-Spektroskopie gemessen.

### Beispiel 2#

In Analogie zu Beispiel 2 wurde die Acrylathaftklebemasse nach dem Abkühlen vom Lösemittel befreit und 100 g des Acrylathotmelts mit 4,6 g 2-HEMA (2-Hydroxyethylmethacrylat) sowie 0,1 g 4-Vinylanilin vermischt. 52 g dieser Mischung wurden nach oben dargestellter Vorgehensweise im Meßkneter bei 130 °C verarbeitet. Nach Beendigung der Reaktion und Beschichtung wurde analog zu Beispiel 2 vorgegangen.
Der Umsatz der Reaktion wurde über IR-Spektroskopie gemessen.

### Beispiel 3#

In Analogie zu Beispiel 3 wurde die Acrylathaftklebemasse nach dem Abkühlen vom Lösemittel befreit und 100 g des Acrylathotmelts mit 6,1 g 2-HEMA (2-Hydroxyethylmethacrylat) sowie 0,1 g 4-Vinylanilin vermischt. 52 g dieser Mischung wurden nach oben dargestellter Vorgehensweise im Meßkneter bei 130 °C verarbeitet. Nach Beendigung der Reaktion und Beschichtung wurde analog zu Beispiel 3 vorgegangen.
Der Umsatz der Reaktion wurde über IR-Spektroskopie gemessen.

### Beispiel 4#

In Analogie zu Beispiel 4 wurde die Acrylathaftklebemasse nach dem Abkühlen vom Lösemittel befreit und 100 g des Acrylathotmelts mit 2,6 g 2-HEMA (2-Hydroxyethylmethacrylat) sowie 0,1 g 4-Vinylanilin vermischt. 52 g dieser Mischung wurden nach oben dargestellter Vorgehensweise im Meßkneter bei 130 °C verarbeitet. Nach Beendigung der Reaktion und Beschichtung wurde analog zu Beispiel 4 vorgegangen.
Der Umsatz der Reaktion wurde über IR-Spektroskopie gemessen.

### Beispiel 5#

In Analogie zu Beispiel 5 wurde die Acrylathaftklebemasse nach dem Abkühlen vom Lösemittel befreit und 100 g des Acrylathotmelts mit 5,8 g 2-HEMA (2-Hydroxyethylmethacrylat). 52 g dieser Mischung wurden nach oben dargestellter Vorgehensweise im Meßkneter bei 150 °C für 1 Minute bei 70 U/min verarbeitet. Nach Beendigung der Reaktion und Beschichtung wurde analog zu Beispiel 5 vorgegangen.
Der Umsatz der Reaktion wurde über IR-Spektroskopie gemessen.

### Beispiel 6#

Im Vergleich zu Beispiel 5# wurde der funktionalisierte Acrylathotmelt mit 30 Gew-% (bezogen auf das Polymer) Kohlenwasserstoffharz TK 90™ (Fa Rüttgers) abgemischt und als Hotmelt aus der Schmelze beschichtet. Es wurde analog zu Beispiel 5# vorgegangen. Die Masse wurde mit 30 kGy ES-Dosis bei einer Beschleunigungsspannung von 230 kV bestrahlt.

### Resultate

Zur Herstellung der Acrylathaftklebemassen wurden zunächst die folgenden Acrylate mit der in Tabelle 1 zusammengestellten Comonomerkonzentrationen polymerisiert. Es wurde konventionell mit AIBN in einem Gemisch aus Aceton/Siedegrenzbenzin polymerisiert. Die einzelnen Reaktionsführungen wurden im vorstehenden Abschnitt beschrieben .

| Tabelle 1 | | | | | |
|---|---|---|---|---|---|
| Beispiel | AS [%] | 2-EHA [%] | MA [%] | n-BA [%] | Anhydrid |
| 1 | 0 | 50 | 35 | 7 | 8% BSI |
| 2 | 1 | 37,5 | 20 | 37,5 | 4 % ISA |
| 3 | 2 | 81 | | 50 | 12 % BSI |
| 4 | 2 | 43 | 10 | 43 | 2 % MSA |
| 5 | 5 | 75 | 10 | 0 | 5 % MSA |

| | | | | | |
|---|---|---|---|---|---|
| AS: Acrylsäure; 2-EHA: 2-Ethylhexylacrylat; MA: Methylacrylat; n-BA: n-Butylacrylat; MSA: Maleinsäureanhydrid; ISA: Itakonsäureanhydrid; BSI: 4-Methacryloxyethyl Trimellitatanhydrid | | | | | |

Neben dem Einsatz zur reaktiven Extrusion wurden die Beispiele 1 - 5 auch klebtechnisch ausgeprüft und als Referenzen verwendet. Hierfür wurden die Polymere konventionell aus Lösung auf eine mit einem Vorstrich (Primer) versehene 23 µm dicke Polyesterfolie aufgetragen. Nach dem Trocknen bei 120 °C für 10 Minuten lag der Masseauftrag der reinen Klebemasse bei 50 g/m². Nach der Härtung wurde von den mit Elektronenstrahlen oder UV-Licht bestrahlten Mustern der Gelwert gemessen und anschließend die Kohäsion über den Schertest bei Raumtemperatur ermittelt. In Tabelle 2 sind die Ergebnisse dargestellt.

| Tabelle 2 | | | | |
|---|---|---|---|---|
| Beispiel | Elektronenstrahl-Dosis [kGy] | UV^{a} Lampendurchlaß | Gelwert [%] | Scherstandzeiten RT, 10 N [min] |
| 1 | 0 | 4 x^{b} | 58 | 580 |
| 2 | 20 | 0 | 39 | 1490 |
| 3 | 15 | 0 | 30 | 7785 |
| 4 | 25 | 0 | 42 | 6840 |
| 5 | 10 | 0 | 5 | 5810 |
| 6 | 30 | 0 | 2 | 165 |

| | | | | |
|---|---|---|---|---|
| ^{a} 120 W/cm, 254 nm Wellenlänge (Quecksilbermitteldruckstrahler Fa. Eltosch), 20 m/min Bahngeschwindigkeit; ^{b}mit 0.4 Gew.-% Bis-(2,4,6-trimethylbenzoyl)-phenylphosphinoxid. Masseauftrag: 50 g/m² | | | | |

Beispiel 1 wurde mit UV-Licht (254 nm) gehärtet. Bei einer Bahngeschwindigkeit von 20 m/min wurde ein Gelwert von 58 % erzielt. Durch den relativ hohen unpolaren Anteil ist die Kohäsion dieser Klebemasse gering. Dagegen wurden die Beispiele 2 - 6 mit Elektronenstrahlen gehärtet. Die gemessenen Gelwerte lagen zwischen 2 und 42 %. Auch die Scherfestigkeit lag bei einem Schergewicht von 10 N in allen Fällen klar unterhalb der geforderten Marke von 10000 Minuten für eine hochscherfeste Acrylathaftklebemasse. Beispiel 6 ließ sich besonders schlecht durch Elektronenstrahlen vernetzen, da im allgemeinen die Elektronenstrahlvernetzung in Gegenwart von Harzen weniger effizient verläuft.

Mit diesen Ergebnissen als Referenz wurden die Beispiele 1 - 5 aufkonzentriert, das heißt vom Lösemittel befreit und somit für den Hotmelt-Prozess vorbereitet. Die Acrylathotmelts wurden dann optinonal mit 0,1 Gew.-% 4-Vinylanilin und mit unterschiedlichen Mengen von hydroxylierten Acrylaten umgesetzt. Die Reaktion wurde in einem Meßkneter durchgeführt, der den Grad der Scherung und die Reaktionstemperatur variieren kann. Zudem läßt sich der Drehmomentverlauf aufnehmen. Zur Übersichtlichkeit sind die Verfahrensparameter und die eingesetzten Mengen an Vinylverbindungen in Tabelle 3 aufgelistet.

| Tabelle 3 | | | | | |
|---|---|---|---|---|---|
| Beispiel | Gew.-% 4-Vinylanilin | Gew-% 2-HEA | Gew-% 2-HEMA | Drehzahl [U/min] | Reaktionstemperatur [°C] |
| 1# | 0,1 | 1,8 | 0 | 30 | 110 |
| 2# | 0,1 | 0 | 4,6 | 30 | 130 |
| 3# | 0,1 | 0 | 6,1 | 30 | 130 |
| 4# | 0,1 | 0 | 2,7 | 30 | 130 |
| 5# | 0 | 0 | 5,8 | 70 | 150 |

| | | | | | |
|---|---|---|---|---|---|
| 2-HEA = 2-Hydroxyethylacrylat; 2-HEMA = 2-Hydroxyethylmethacrylat | | | | | |

Beispiel 1# wurde mit nur 0,5 Moläquivalenten 2-HEA umgesetzt. Dagegen versetzte man die Beispiele 2# - 4# mit jeweils äquimolaren Mengen 2-HEMA. Als Katalysator wurde 4-Vinylanilin ausgewählt, da die Doppelbindung während der Vernetzung in das Polyacrylat eingebaut wird und somit keine Restanteile an Base in der Haftklebemasse als leicht flüchtige Anteile verbleiben. Die Drehzahl zur Durchmischung lag bei 30 U/min und damit relativ niedrig, um eine geringe Scherung der Haftklebemasse zu simulieren. Bei Beispiel 5# wurde eine höhere Scherung eingebracht. Die Reaktionstemperatur wurde für Beispiel 1# auf 110 °C gesetzt, da dieses Polymer am niedrig-viskosesten war. Für die Beispiele 2# - 4# lag die Reaktions- und Extrusionstemperatur bei 130 °C, bei Beispiel 5# bei 150 °C. Die Reaktionsdauer für alle Muster lag bei einer Stunde, bei Beispiel 5 # bei einer Minute. Anschließend wurden die Beispiele zum einen auf einen mit Vorstrich (Primer) versehene Polyesterträger (23 µm dicke) als Hotmelt durch eine Düse beschichtet und dann - je nach Beispiel - analog zu Tabelle 2 mit UV- oder Elektronenstrahlen gehärtet und klebtechnisch ausgeprüft. Der Masseauftrag der reinen Acrylathaftklebemasse lag wiederum bei 50 g/m². Weiterhin wurde der Umsatz der Reaktion durch FT-IR bestimmt. Die Ergebnisse dieser Ausprüfungen sind in Tabelle 4 zusammengefaßt.

| Tabelle 4 | | | | | |
|---|---|---|---|---|---|
| Beispiel | Elektronenstrahl -Dosis [kGy] | UV^{a} Lampendurchlaß | Gelwert [%] | Scherstandzeiten RT, 10 N [min] | Umsatz Anhydrid [%] |
| 1# | 0 | 4 x^{b} | 70 | 4675 | 38 |
| 2# | 20 | 0 | 64 | +10000 | 80 |
| 3# | 15 | 0 | 68 | +10000 | 76 |
| 4# | 25 | 0 | 52 | +10000 | 82 |
| 5# | 10 | 0 | 65 | +10000 | 84 |
| 6# | 30 | 0 | 41 | 3415 | 84 |

| | | | | | |
|---|---|---|---|---|---|
| ^{a}120 W/cm, 254 nm Wellenlänge (Quecksilbermitteldruckstrahler Fa. Eltosch), 20 m/min Bahngeschwindigkeit; ^{b} mit 0.4 Gew.-% Bis-(2,4,6-trimethylbenzoyl)-phenylphosphinoxid. Masseauftrag: 50 g/m² | | | | | |

Der Umsatz an Anhydrid, ausgedrückt durch die prozentuale Abnahme der CO-IR-Bande, fällt bei Beispiel 1# relativ gering aus, da nur 0,5 Moläquivalente 2-HEA eingesetzt worden waren. Dennoch war der Effekt für die UV-Vernetzung beachtlich. Der Gelwert stieg unter den gleichen Vernetzungsbedingungen von 58 auf 70 % an. Weiterhin wurde die Masse durch die reaktive Extrusion mit 2-HEA nach der Vernetzung bedeutend kohäsiver. Der gleiche Trend wurde für die Beispiele 2# - 5# gemessen. Die Gelwerte stiegen zum Teil beträchtlich an und die Scherfestigkeit dieser Beispiele lag generell über 10000 Minuten. Hier wurde ein Umsatz von etwa 80 % durch IR-Spektroskopie detektiert. Auch die mit Harz abgemischte Probe zeigt, daß durch Reaktive Extrusion die erforderlich Elektronenstrahldosis deutlich herabgesetzt werden kann.
Mit diesen Beispielen kann belegt werden, daß das Prinzip der reaktiven Extrusion zur Herstellung von leicht-vernetzbaren Acrylathotmelts genutzt werden kann. Ferner wurde eine kohäsionssteigernde Wirkung festgestellt.

Durch die deutliche erhöhte Vernetzungsgeschwindigkeit läßt sich eine deutlich bessere und wirkungsvollere Vernetzung erzielen, insbesondere, wenn als vernetzungsfunktionelle Gruppen Acrylat- und Methacrylatdoppelbindungen eingeführt wurden. Sogar nach diesem Verfahren hergestellten Acrylathaftklebmassen, die ein verglichen mit herkömmlich hergestellten (nicht funktionalisierten) Acrylathaftklebemassen um 20 - 40 % reduziertes Molekulargewicht besitzen, erreichen gleich gute Klebeeigenschaften wie die herkömmlich hergestellten höhermolekularen Haftklebemassen, weisen aber aufgrund des geringen Molekulargewichtes eine deutlich erniedrigte Viskosität und damit eine erheblich verbesserte Verarbeitungsqualität im Hotmelt-Prozeß auf.

## Patentansprüche

1. Verfahren zur Herstellung vernetzter Acrylathaftklebemassen, **dadurch gekennzeichnet, daß**
• zunächst durch freie radikalische (Co-)Polymerisation Polyacrylate aus den folgenden Monomeren hergestellt werden:
(a) Acryl- und Methacrylsäure-Monomere der folgenden Struktur 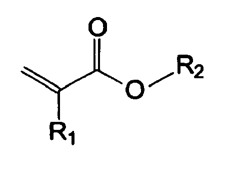 mit R₁ = H oder CH₃
und R₂ = eine Alkylkette mit 2 - 20 C-Atomen
mit einem Anteil von 45 - 99,5 Gew.-% am Monomergemisch,
(b) ein oder mehrere Carbonsäureanhydride, welche olefinische Doppelbindungen enthalten,
mit einem Anteil von 0,5 - 25 Gew.-% am Monomergemisch,
(c) weitere funktionelle Gruppen A besitzende olefinisch ungesättigte Monomere mit einem Anteil von 0 - 30 Gew.-% am Monomerengemisch,
• die derart hergestellten Polymere in einem Extruder zu einer Polyacrylatmasse aufkonzentriert werden, deren Lösungsmittelgehalt ≤ 0,5 Gew.-% ist,
• nach der Aufkonzentration im Extruder oder in einem Cokneter weitere Monomere zu der Polyacrylatmasse gegeben werden, wobei diese Monomere mindestens zwei funktionelle Gruppen B und C besitzen, wobei die Gruppen B mit den Carbonsäureanhydriden polymeranaloge Reaktionen eingehen können und die Gruppen C vernetzungsfähige Gruppen sind, und in dem Extruder beziehungsweise in dem Cokneter eine Reaktion zwischen den funktionellen Gruppen B und dem Carbonsäureanhydrid stattfindet, welches die die funktionellen Gruppen B enthaltenden Monomere als Seitenketten an die Polymere anknüpft,
• nach der Reaktion zwischen den funktionellen Gruppen B und dem Carbonsäureanhydrid durch energiereiche Strahlung eine Vernetzung der Polymere durchgeführt wird.

2. Verfahren nach Anspruch 1, **dadurch gekennzeichnet, daß**
die Haftklebemasse zwischen der Reaktion der funktionellen Gruppen B mit dem Carbonsäureanhydrid und der Vernetzung aus der Schmelze auf einen Träger aufgetragen wird.

3. Verfahren nach einem der vorangehenden Ansprüche, **dadurch gekennzeichnet, daß** die funktionellen Gruppen B der Monomere Hydroxygruppen, Alkoxygruppen, Mercaptogruppen, Thioethergruppen, unsubstituierte und substituierte Aminogruppen, Oxazoline und/oder unsubstituierte oder substituierte Amidogruppen sind.

4. Verfahren nach einem der vorangehenden Ansprüche, **dadurch gekennzeichnet, daß** die funktionellen Gruppen C der Monomere Vinylgruppen, Acrylat- und/oder Methacrylatgruppen sind.

5. Verfahren nach einem der vorangehenden Ansprüche, **dadurch gekennzeichnet, daß** als funktionelle Gruppen B und C enthaltende Monomere 2-Hydroxyethylacrylat (2-HEA, Acrylsäure-2-hydroxyethylester), Hydroxypropylacrylat (Acrylsäure-3-hydroxypropylester), 2-Hydroxyethylmethacrylat (2-HEMA, Methacrylsäure-2-hydroxyethylester) und/oder Hydroxypropylmethacrylat (Methacrylsäure-3-hydroxypropylester) eingesetzt werden.

6. Verfahren nach einem der vorangehenden Ansprüche, **dadurch gekennzeichnet, daß** das molare Verhältnis der Zahl n_{B} der funktionellen Gruppen B der zugesetzten Monomere zu der Zahl n_{CSA} der einpolymerisierten Carbonsäureanhydrideinheiten n_{B}/n_{CSA} zwischen 0,8 und 1,2 liegt, sehr bevorzugt zwischen 0,8 und 1 liegt.

7. Verfahren nach einem der vorangehenden Ansprüche, **dadurch gekennzeichnet, daß** Katalysatoren zu der Polyacrylatmasse gegeben werden, insbesondere LewisSäuren, insbesondere p-Toluolsulfonsäure, oder Lewis-Basen, insbesondere 4-Vinylanilin.

8. Verfahren nach einem der vorangehenden Ansprüche, **dadurch gekennzeichnet, daß** die Reaktionstemperatur der polymeranalogen Reaktion zwischen 60 °C und 180 °C, insbesondere zwischen 10 und 160 °C gewählt wird.

9. Verfahren nach einem der vorangehenden Ansprüche, **dadurch gekennzeichnet, daß** der Monomermischung oder der Acrylathaftklebemasse Harze oder andere Additive, wie Alterungsschutzmittel, Lichtschutzmittel, Ozonschutzmittel, Fettsäuren, Weichmacher, Keimbildner, Blähmittel, Beschleuniger und/oder Füllmittel zugesetzt werden.

10. Verfahren nach einem der oberen Ansprüche, **dadurch gekennzeichnet, daß** der zu vernetzenden Polyacrylatmasse Vernetzer zugesetzt sind, insbesondere bi- und/oder multifunktionelle Acrylate und/oder Methacrylate oder Photoinitiatoren.

11. Verfahren nach einem der vorangehenden Ansprüche, **dadurch gekennzeichnet, daß** als energiereiche Strahlung für die Vernetzung Elektronenstrahlen oder UV-Strahlung eingesetzt wird.

12. Verwendung einer nach einem Verfahren nach zumindest einem der vorangehenden Ansprüche hergestellten Acrylathaftklebebmasse für ein Klebeband, wobei die Acrylathaftklebemasse ein- oder beidseitig auf einem Träger aufgetragen ist.

## Claims

1. Process for preparing crosslinked acrylic pressure sensitive adhesives, **characterized in that**
• polyacrylates are first prepared by free-radical (co)polymerization from the following monomers:
(a) acrylic and methacrylic acid monomers of the following structure: 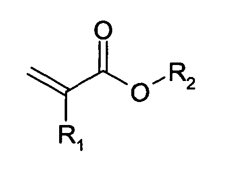 where R₁ = H or CH₃
and R₂ = an alkyl chain with 2 - 20 carbon atoms
with a fraction of 45-99.5% by weight in the monomer mixture,
(b) one or more carboxylic anhydrides containing olefinic double bonds,
with a fraction of 0.5 - 25% by weight in the monomer mixture,
(c) further olefinically unsaturated monomers possessing functional groups A, with a fraction of 0 - 30% by weight in the monomer mixture,
• the polymers thus prepared are concentrated in an extruder to give a polyacrylate composition whose solvent content is ≤ 0.5% by weight,
• after the concentration in the extruder or in a cokneader, further monomers are added to the polyacrylate composition, these monomers possessing at least two functional groups B and C, the groups B being able to enter into polymer-analogous reactions with the carboxylic anhydrides, and the groups C being crosslinkable groups, and in the extruder or in the cokneader a reaction takes place between the functional groups B and the carboxylic anhydride, which attaches the monomers containing functional groups B as side chains to the polymers,
• after the reaction between the functional groups B and the carboxylic anhydride, crosslinking of the polymers is carried out by means of high-energy radiation.

2. Process according to Claim 1, **characterized in that**, between the reaction of the functional groups B with the carboxylic anhydride and the crosslinking, the pressure sensitive adhesive is applied from the melt to a backing.

3. Process according to one of the preceding claims, **characterized in that** the functional groups B of the monomers are hydroxyl groups, alkoxy groups, mercapto groups, thioether groups, unsubstituted and substituted amino groups, oxazolines and/or unsubstituted or substituted amido groups.

4. Process according to one of the preceding claims, **characterized in that** the functional groups C of the monomers are vinyl groups, acrylate groups and/or methacrylate groups.

5. Process according to one of the preceding claims, **characterized in that** monomers containing functional groups B and C that are used comprise 2-hydroxyethyl acrylate (2-HEA, acrylic acid 2-hydroxyethyl ester), hydroxypropyl acrylate (acrylic acid 3-hydroxypropyl ester), 2-hydroxyethyl methacrylate (2-HEMA, methacrylic acid 2-hydroxyethyl ester) and/or hydroxypropyl methacrylate (methacrylic acid 3-hydroxypropyl ester).

6. Process according to one of the preceding claims, **characterized in that** the molar ratio of the number n_{B} of the functional groups B of the added monomers to the number n_{CSA} of the copolymerized carboxylic anhydride units, n_{B}/n_{CSA}, lies between 0.8 and 1.2, very preferably between 0.8 and 1.

7. Process according to one of the preceding claims, **characterized in that** catalysts are added to the polyacrylate composition, especially Lewis acids, particularly p-toluenesulfonic acid, or Lewis bases, particularly 4-vinylaniline.

8. Process according to one of the preceding claims, **characterized in that** the reaction temperature of the polymer-analogous reaction is chosen to be between 60°C and 180°C, in particular between 10 and 160°C.

9. Process according to one of the preceding claims, **characterized in that** resins or other additives, such as aging inhibitors, light stabilizers, ozone protectants, fatty acids, plasticizers, nucleators, blowing agents, accelerators and/or fillers are added to the monomer mixture or to the acrylic pressure sensitive adhesive.

10. Process according to one of the above claims, **characterized in that** crosslinkers are added to the polyacrylate composition to be crosslinked, especially difunctional and/or polyfunctional acrylates and/or methacrylates or photoinitiators.

11. Process according to one of the preceding claims, **characterized in that** electron beams or UV radiation are used as high-energy radiation for the crosslinking.

12. Use of an acrylic pressure sensitive adhesive prepared by a process according to at least one of the preceding claims for an adhesive tape, the acrylic pressure sensitive adhesive being applied to one or both sides of a backing.

## Revendications

1. Procédé pour la préparation de masses autoadhésives à base d'acrylate, réticulées, **caractérisé en ce que**
- des polyacrylates sont d'abord préparés par une (co)polymérisation par des radicaux libres à partir des monomères suivants :
(a) des monomères à base d'acide acrylique et d'acide méthacrylique présentant la structure suivante 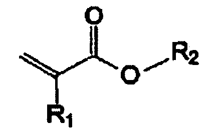
- avec R₁ = H ou CH₃
- et R₂ = une chaîne alkyle comprenant 2-20 atomes de carbone
en une proportion de 45-99,5% en poids par rapport au mélange de monomères,
(b) un ou plusieurs anhydrides d'acide carboxylique, qui contiennent des doubles liaisons oléfiniques,
en une proportion de 0,5-25% en poids par rapport au mélange de monomères,
(c) d'autres monomères oléfiniquement insaturés présentant des groupes fonctionnels A en une proportion de 0-30% en poids par rapport au mélange de monomères,
- les polymères ainsi préparés sont concentrés dans une extrudeuse en une masse de polyacrylate, dont la teneur en solvant est ≤ 0,5% en poids,
- après la concentration dans l'extrudeuse ou dans un co-malaxeur, d'autres monomères sont ajoutés à la masse de polyacrylate, ces monomères présentant au moins deux groupes fonctionnels B et C, les groupes B pouvant entrer en réaction de manière analogue à des polymères avec les anhydrides d'acide carboxylique et les groupes C étant des groupes aptes à la réticulation, et une réaction se produisant dans l'extrudeuse ou dans le co-malaxeur entre les groupes fonctionnels B et l'anhydride de l'acide carboxylique, qui lie les monomères contenant les groupes fonctionnels B comme chaînes latérales aux polymères,
- après la réaction entre les groupes fonctionnels B et l'anhydride de l'acide carboxylique, une réticulation des polymères est réalisée par un rayonnement riche en énergie.

2. Procédé selon la revendication 1, **caractérisé en ce que** la masse autoadhésive est appliquée sur un support à partir de la masse fondue entre la réaction des groupes fonctionnels B avec l'anhydride de l'acide carboxylique et la réticulation.

3. Procédé selon l'une quelconque des revendications précédentes, **caractérisé en ce que** les groupes fonctionnels B des monomères sont des groupes hydroxy, des groupes alcoxy, des groupes mercapto, des groupes thioéther, des groupes amino non substitués et substitués, des oxazolines et/ou des groupes amido non substitués ou substitués.

4. Procédé selon l'une quelconque des revendications précédentes, **caractérisé en ce que** les groupes fonctionnels C des monomères sont des groupes vinyle, acrylate et/ou méthacrylate.

5. Procédé selon l'une quelconque des revendications précédentes, **caractérisé en ce qu'**on utilise comme monomères contenant des groupes fonctionnels B et C l'acrylate de 2-hydroxyéthyle (2-HEA, ester 2-hydroxyéthylique de l'acide acrylique), l'acrylate d'hydroxypropyle (ester 3-hydroxypropylique de l'acide acrylique), le méthacrylate de 2-hydroxyéthyle (2-HEMA, ester 2-hydroxyéthylique de l'acide méthacrylique) et/ou le méthacrylate d'hydroxypropyle (ester 3-hydroxypropylique de l'acide méthacrylique).

6. Procédé selon l'une quelconque des revendications précédentes, **caractérisé en ce que** le rapport molaire du nombre n_{B} de groupes fonctionnels B des monomères ajoutés au nombre n_{CSA} d'unités d'anhydride d'acide carboxylique copolymérisées n_{B}/n_{CSA} est situé entre 0,8 et 1,2, de manière tout à fait préférée entre 0,8 et 1.

7. Procédé selon l'une quelconque des revendications précédentes, **caractérisé en ce que** des catalyseurs sont ajoutés à la masse de polyacrylate, en particulier des acides de Lewis, en particulier l'acide p-toluènesulfonique, ou des bases de Lewis, en particulier la 4-vinylaniline.

8. Procédé selon l'une quelconque des revendications précédentes, **caractérisé en ce que** la température de la réaction analogue aux polymères est choisie entre 60°C et 180°C, en particulier entre 10 et 160°C.

9. Procédé selon l'une quelconque des revendications précédentes, **caractérisé en ce que** le mélange de monomères ou la masse autoadhésive à base d'acrylate est additionné(e) de résines ou d'autres additifs, tels que des agents de protection contre le vieillissement, des agents de protection contre la lumière, des agents de protection contre l'ozone, des acides gras, des plastifiants, des agents de formation de germes, des agents gonflants, des accélérateurs et/ou des charges.

10. Procédé selon l'une quelconque des revendications ci-dessus, **caractérisé**
**en ce** la masse de polyacrylate à réticuler est additionnée de réticulants, en particulier d'acrylates et/ou de méthacrylates difonctionnels et/ou polyfonctionnels ou de photo-initiateurs.

11. Procédé selon l'une quelconque des revendications précédentes, **caractérisé en ce qu'**on utilise comme rayonnement riche en énergie pour la réticulation des rayons électroniques ou un rayonnement UV.

12. Utilisation d'une masse autoadhésive à base d'acrylate préparée selon un procédé selon au moins l'une quelconque des revendications précédentes pour une bande adhésive, la masse autoadhésive à base d'acrylate étant appliquée sur un support sur une ou deux faces.
